# EUROPÄISCHE PATENTSCHRIFT

(11) **EP 3 538 298 B1**
(45) Veröffentlichungstag und Bekanntmachung des Hinweises auf die Patenterteilung: **24.01.2024**
(21) Anmeldenummer: 17803812.1
(22) Anmeldetag: 03.11.2017
(51) Int. Cl.: B22F 10/31, B33Y 10/00, B33Y 30/00, B29C 64/00, G12B 13/00, G01N 27/00, G02B 26/08, G02B 27/00, G01S 5/16, B22F 10/28, B22F 12/49, B33Y 50/02, G02B 26/10, B29C 64/153, B29C 64/268, B23K 26/34, G02B 5/122

(54) **VERFAHREN ZUM KALIBRIEREN EINER SCANNEREINRICHTUNG UND BEARBEITUNGSMASCHINE**
METHOD FOR CALIBRATING A SCANNER, AND MACHINING DEVICE
PROCÉDÉ POUR CALIBRER UN DISPOSITIF DE BALAYAGE ET MACHINE D'USINAGE

(30) Priorität: 11.11.2016 DE 102016222186
(43) Veröffentlichungstag der Anmeldung: 18.09.2019
(73) Patentinhaber: Trumpf Laser- und Systemtechnik GmbH, 71254 Ditzingen (DE)
(72) Erfinder: ALLENBERG-RABE, Matthias, 70499 Stuttgart (DE); ORTMANN, Jürgen, 57439 Attendorn (DE)
(74) Vertreter: Trumpf Patentabteilung
(86) Internationale Anmeldenummer: PCT/EP2017/078140
(87) Internationale Veröffentlichungsnummer: WO 2018/086996

(56) Entgegenhaltungen:
- EP-A1- 0 331 962
- WO-A1-2015/040185
- WO-A2-2016/085334
- DE-A1-102012 110 646
- DE-B3-102012 100 721
- US-A- 5 753 171
- US-A1- 2009 002 687
- US-A1- 2010 176 539
- US-A1- 2015 346 330
- US-A1- 2016 082 668
- US-A1- 2016 228 987

## Beschreibung

### Verfahren zum Kalibrieren einer Scannereinrichtung und Bearbeitungsmaschine

Die vorliegende Erfindung betrifft ein Verfahren zum Kalibrieren einer Scannereinrichtung zur Positionierung eines Laserstrahls in einem Bearbeitungsfeld. Die Erfindung betrifft auch eine Bearbeitungsmaschine zum Herstellen von dreidimensionalen Bauteilen durch Bestrahlen von Pulverschichten.

Eine Scannereinrichtung zur Ausrichtung bzw. zur Positionierung eines Laserstrahls auf einem Bearbeitungsfeld weist typischerweise mindestens einen, in der Regel zwei auslenkbare, drehbare Scannerspiegel auf. Bei einer solchen Scannereinrichtung ergibt sich typischerweise bauartbedingt eine kissenförmige Bildverzerrung im Bearbeitungsfeld der Scannereinrichtung, das im Folgenden auch als Bildfeld bezeichnet wird. Auch ist der Übersetzungsfaktor zwischen der Drehbewegung der Scannerspiegel zur Bewegung der Position des Laserstrahls im Bildfeld abhängig von der Distanz zwischen der Scannereinrichtung und dem Bildfeld. Eine Projektion eines vorgegebenen Musters auf ein Bildfeld mit Hilfe einer solchen Scannereinrichtung erfolgt daher typischerweise mit gewissen geometrischen Fehlern. Für eine maßstabsgerechte und verzerrungsfreie Projektion eines vorgegebenen Musters mittels einer solchen Scannereinrichtung ist eine Kalibration erforderlich. Bei der Kalibration werden die Projektionsfehler der Scannereinrichtung möglichst exakt ermittelt und die Ansteuerung der Scannereinrichtung wird anhand der ermittelten Projektionsfehler geeignet modifiziert, so dass die Projektionsfehler und die modifizierte Ansteuerung der Scannereinrichtung sich gerade kompensieren und das gewünschte Muster in dem Bildfeld erzeugt wird.

Aus der US 2013/0186871 A1 ist eine Laserbearbeitungsmaschine zum Bestrahlen eines Werkstücks mit einem Laserstrahl bekannt geworden, bei der ein Halter vorgesehen ist, an dessen Oberfläche beim Laserbearbeiten ein Werkstück angeordnet werden kann. An der Oberfläche des Halters ist ein Raster angebracht, das die Positionskoordinaten von jeweiligen Positionen an der Oberfläche des Halters kennzeichnet. Der Laserstrahl wird über einen Spiegel an einer Zielbestrahlungsposition an der Oberfläche positioniert und ein Bild der Zielbestrahlungsposition und ihrer Umgebung an der Oberfläche wird von dem Kamerasensor erfasst. Anhand des von dem Kamerasensor aufgenommenen Bildes wird ein Fehler zwischen der Zielbestrahlungsposition und einer Ist-Position des Laserstrahls detektiert. Das Raster dient als Referenz für die XY-Koordinaten an der Oberfläche des Halters und somit zur Bestimmung der Fehler zwischen der jeweiligen Ist-Position und der Zielbestrahlungsposition.

In der WO 2009/026520 A1 wird eine automatische geometrische Kalibration mit Hilfe einer Kalibrierplatte durchgeführt, die eine nicht-streuende Oberfläche mit einer Mehrzahl von streuenden Messmarken in einem periodischen Raster aufweist. Ein Laserstrahl wird über die Messmarken gescannt und die gestreute Strahlung wird von einem Detektor detektiert, der oberhalb der Kalibrierplatte angeordnet ist. Die detektierten Signale werden verarbeitet, um die tatsächlichen Zentrums-Positionen der Messmarken zu messen und eine Interpolation durchzuführen, um auf diese Weise eine kalibrierte Beziehung zwischen den Winkelpositionen von Scannerspiegeln und XY-Positionen in einer Aufbauebene zu erstellen.

In der US 2003/0002055 A1 ist ein Verfahren zur Kalibrierung des optischen Systems einer Lasermaschine beschrieben, bei der eine Probenplatte in der Fokusebene einer Abbildungseinheit angeordnet wird und vorgegebene Rasterpunkte durch einen Laserstrahl markiert werden. Die markierten Punkte werden über eine Kamera vermessen und ihre Positionswerte werden mit vorgegebenen Positionswerten von Zielpunkten verglichen, um daraus Korrekturwerte abzuleiten und zu speichern, die für die Ansteuerung einer Ablenkeinheit verwendet werden.

In der WO 2015/040185 A1 wird ein Verfahren zum Kalibrieren eines Laserscanner-Systems beschrieben, bei dem eine Kalibrationsplatte mit Referenzmarkierungen verwendet wird, die angeordnet ist, um einen gerichteten Strahl innerhalb eines Satzes von bekannten Laserscanner-Positionen aufzunehmen. Der gerichtete Strahl erzeugt einen Laserspot an der Kalibrationsplatte und der Laserspot wird mit einer Bildaufnahmeeinrichtung, beispielsweise mit einer Digitalkamera, aufgenommen. Die Kalibrationsplatte kann aus einem teilweise reflektierenden Material gebildet sein, das nicht so stark reflektierend ist, dass die Laserstrahlung das von der Bildaufnahmeeinrichtung aufgenommene Bild vollständig überflutet, beispielsweise aus anodisiertem Aluminium. WO 2016/085334 A2 offenbart ein Verfahren und eine Vorrichtung zum Kalibrieren einer Scannereinrichtung einer 3d generativen Pulverbettsmaschine, wobei die Referenzsensoren neben dem Bearbeitungsfeld fixiert sind. DE 10 2012 110646 A1 offenbart ein Verfahren und eine Vorrichtung zur Kalibrierung des Sensorsystems, einschließlich der Abtastvorrichtung eines SLM-Geräts. Die Kalibrierung kann entweder durch einen passiven oder aktiven Sensor durchgeführt werden. Dieser passive Sensor kann ein Retroreflektor sein.

### Aufgabe der Erfindung

Der Erfindung liegt die Aufgabe zugrunde, eine Verfahren zum Kalibrieren einer Scannereinrichtung und eine Bearbeitungsmaschine bereitzustellen, welche die Positionierung eines Laserstrahls in einem Bearbeitungsfeld mit hoher Genauigkeit ermöglichen.

### Gegenstand der Erfindung

Diese Aufgabe wird erfindungsgemäß durch ein Verfahren der eingangs genannten Art gelöst, welches folgende Schritte umfasst die Schritte, wie sie im beigefügten unabhängigen Verfahrensanspruch definiert sind.

Erfindungsgemäß wird vorgeschlagen, für das Kalibrieren der Scannereinrichtung einen Retroreflektor zu verwenden, d.h. ein reflektierendes Material bzw. ein reflektierendes Objekt, welches einen erheblichen Anteil eines auf den Retroreflektor auftreffenden Laserstrahls im Wesentlichen unabhängig vom Einfallswinkel zur Strahlquelle - im vorliegenden Fall zur Scannereinrichtung - zurück reflektiert. Der Retroreflektor weist über einen großen Einfallswinkelbereich eine Reflektivität von z.B. mehr als 5% in die Einfallsrichtung des Laserstrahls auf. Die Reflektivität des Retroreflektors in die Einfallsrichtung ist somit deutlich größer als bei herkömmlichen reflektierenden Objekten bzw. Materialien, bei denen die einfallende Strahlung spekular reflektiert wird, so dass nur ein sehr kleiner Anteil an gestreuter Laserstrahlung in die Einfallsrichtung des Laserstrahls zurück reflektiert wird. Die erhöhte Intensität der von dem Retroreflektor zur Scannereinrichtung zurück reflektierten Laserstrahlung erhöht deren Detektierbarkeit und somit die Präzision bei der Ermittlung der Ist-Position des Laserstrahls in dem Bearbeitungsfeld.

Bei einer Scannereinrichtung, die in einer Bearbeitungsmaschine zur Herstellung von dreidimensionalen Bauteilen verwendet wird, befindet sich das Bearbeitungsfeld der Scannereinrichtung in einer Bearbeitungskammer, in der sich ein Pulvermaterial befindet. Eine Fokussiereinrichtung fokussiert den Laserstrahl typischerweise in derjenigen Ebene, in der sich eine Pulverschicht befindet, die mittels des Laserstrahls bestrahlt wird, um eine Schicht des dreidimensionalen Bauteils zu erzeugen, wozu das Pulvermaterial lokal aufgeschmolzen wird. Der Retroreflektor kann für die Kalibration manuell in die Bearbeitungskammer eingebracht und in dem Bearbeitungsfeld angeordnet werden.

Erfindungsgemäß wird der Retroreflektor automatisiert in dem Bearbeitungsfeld der Scannereinrichtung angeordnet. Zu diesem Zweck kann der Retroreflektor an einer beweglichen Einrichtung angebracht werden, die in das Bearbeitungsfeld bewegt wird, um die Kalibration durchzuführen und die wieder aus dem Bearbeitungsfeld entfernt wird, um die Bestrahlung zur Herstellung des dreidimensionalen Bauteils durchzuführen. Für die automatisierte Bewegung kann beispielsweise ein verschwenkbarer und/oder verschiebbarer Arm verwendet werden, welcher den Retroreflektor in das Bearbeitungsfeld hinein und aus diesem heraus bewegt.

Bei einer Weiterbildung wird der Retroreflektor an einer beweglichen Einrichtung zum Auftragen von Pulverschichten in das Bearbeitungsfeld der Scannereinrichtung bewegt. In der Bearbeitungskammer befindet sich typischerweise eine Einrichtung, welche eine dünne Pulverschicht auf darunter liegende Pulverschichten bzw. auf einen Träger für die Pulverschichten aufträgt. Die Einrichtung wird zum Auftragen einer jeweiligen Pulverschicht zumindest teilweise in das Bearbeitungsfeld der Scannereinrichtung bewegt, beispielsweise in einer linearen Bewegung. Bei der Einrichtung kann es sich beispielsweise um einen Arm mit einem Schieber oder einer Rolle handeln, die Pulvermaterial aus einem Reservoir zu dem Träger bzw. zu einem oberhalb von dem Träger befindlichen Pulverbett transportiert. Die Einrichtung zum Auftragen der Pulverschichten kann insbesondere mehrere Retroreflektoren in Form von dreidimensionalen Objekten aufweisen. Diese können beispielsweise entlang einer der Bewegungsrichtung zum Transport des Pulvermaterials senkrechten Richtung beabstandet voneinander angeordnet werden, um eine Kalibration der Scannereinrichtung an mehreren Positionen in dieser Richtung zu ermöglichen.

Auf diese Weise kann die ohnehin in der Bearbeitungsmaschine vorhandene Einrichtung zum Auftragen von Pulverschichten auch für das Anordnen des Retroreflektors in dem Bearbeitungsfeld genutzt werden. In der Regel ist der Retroreflektor beim Überfahren durch den Laserstrahl in dem Bearbeitungsfeld ortsfest angeordnet, d.h. die Bewegung der Einrichtung zum Auftragen der Pulverschichten wird während des Kalibrierens bzw. des Überfahrens durch den Laserstrahl gestoppt. Dies ist aber nicht zwingend erforderlich, d.h. der Retroreflektor kann ggf. auch während der Kalibration, genauer gesagt während des Ermittelns der Ist-Position des Laserstrahls, über das Bearbeitungsfeld bewegt werden.

Bei einer weiteren Variante wird der Laserstrahl an einem Retroreflektor in Form eines dreidimensionalen Objekts, insbesondere in Form einer transparenten Kugel, in die Scannereinrichtung zurück reflektiert, wobei bevorzugt die Ist-Position des Laserstrahls in dem Bearbeitungsfeld anhand einer Intensitätsverteilung der detektierten, zurück reflektierten Laserstrahlung ermittelt wird. Unter einem dreidimensionalen Objekt wird ein Objekt verstanden, das in allen drei Raumdimensionen eine Ausdehnung von mindestens 20 µm, bevorzugt von mindestens 50 µm, besonders bevorzugt von mindestens 100 µm, insbesondere von mindestens 1 mm aufweist.

Bei dieser Variante kann es sich bei dem Retroreflektor beispielsweise um eine (kleine) transparente Kugel handeln, die aus einem den Laserstrahl transmittierenden Material, beispielsweise aus Glas, insbesondere Quarzglas, Saphir, Diamant etc. gebildet sein kann und die in der Regel einen Durchmesser in der Größenordnung von mehreren Mikrometern bis zu wenigen Millimetern, in der Regel weniger als 10 mm, aufweist. Ein solcher dreidimensionaler Retroreflektor ermöglicht eine sehr präzise Kalibrierung der Scannereinrichtung auf eine einzelne Position, die der Retroreflektor-Position in dem Bearbeitungsfeld entspricht, welche durch die Position, genauer gesagt durch die XY-Koordinaten des Zentrums der transparenten Kugel vorgegeben ist. Die transparente Kugel wirkt als Retroreflektor, da diese einen Großteil des von einer weit entfernten Lichtquelle einfallenden Lichts auf einen Fleck im Bereich der hinteren Oberfläche der Kugel fokussiert, wobei durch den Unterschied im Brechungsindex zwischen der Kugel und der Umgebung, typischerweise Luft, die hintere Oberfläche der Kugel als Retroreflektor wirkt. Es versteht sich, dass ggf. auch dreidimensionale Objekte, die auf andere Weise, beispielsweise als Prismen oder dergleichen ausgebildet sind, als Retroreflektoren verwendet werden können. Auch können mehrere dreidimensionale Retroreflektoren, die voneinander beabstandet auf einem gemeinsamen Träger angeordnet sind, für die präzise Kalibrierung auf mehrere Positionen in dem Bildfeld verwendet werden.

Für die Kalibrierung kann beispielsweise wie nachfolgend beschrieben vorgegangen werden: Der Retroreflektor in Form des dreidimensionalen Objekts wird an einer vorgegebenen Reflektor-Position in dem Bearbeitungsfeld angeordnet und der Scannereinrichtung wird eine Soll-Position vorgegeben, die nominell der vorgegebenen Reflektor-Position in dem Bearbeitungsfeld entspricht. Entspricht die Ist-Position des Laserstrahls in dem Bearbeitungsfeld exakt der vorgegebenen Soll-Position, so kommt es zu einer maximalen Reflexion des Laserstrahls an dem Retroreflektor, d.h. es wird eine maximale Intensität der reflektierten Laserstrahlung detektiert. Bei Abweichungen zwischen der Ist-Position und der Soll-Position wird eine geringere Intensität der reflektierten Laserstrahlung detektiert. Zur Bestimmung derjenigen Ist-Position des Laserstrahls, die der Reflektor-Position entspricht, überfährt die Scannereinrichtung den Retroreflektor mehrfach, wobei die Scannereinrichtung einen Bereich mit vorgegebener räumlicher Erstreckung um die nominelle Reflektor-Position herum abscannt und wobei jeweils die zurück reflektierte Laserstrahlung detektiert wird. Aus der zweidimensionalen Intensitätsverteilung (Bitmap) der detektierten Laserstrahlung wird mit Hilfe eines Bildauswertealgorithmus ein Intensitätsschwerpunkt als Ist-Position des Laserstrahls bestimmt. Die auf diese Weise ermittelte Ist-Position des Laserstrahls entspricht genau der Reflektor-Position. In der Regel besteht jedoch eine Abweichung zwischen der Ist-Position und einer der Scannereinrichtung (ursprünglich) vorgegebenen Soll-Position. Diese Abweichung wird korrigiert, beispielsweise indem die beim Erreichen der Reflektor-Position in der Scannereinrichtung vorliegenden Winkeleinstellungen der beiden Scannerspiegel als neue Soll-Position der Ist-Position bzw. der Reflektor-Position zugeordnet und in einer Speichereinrichtung hinterlegt werden. Für den Fall, dass die Scannereinrichtung bei der nachfolgenden Bearbeitung den Laserstrahl an einer Position in dem Bearbeitungsfeld positioniert, die der Reflektor-Position entspricht, wird der Scannereinrichtung die korrigierte Soll-Position vorgegeben.

Bei einer alternativen Ausführungsform wird der Laserstrahl an einem Retroreflektor in Form eines retroreflektierenden Flächenbereichs in die Scannereinrichtung zurück reflektiert. In diesem Fall kann als Retroreflektor beispielsweise eine so genannte Retroreflektorfolie dienen, bei der eine Vielzahl von reflektierenden Elementen beispielsweise in Form von (Mikro-)Glaskugeln bzw. Glasperlen oder von Mikroprismen in die Folie eingebettet oder eingekapselt sind. In diesem Fall wirkt der gesamte Flächenbereich als Retroreflektor, so dass nicht unterschieden werden kann bzw. nicht unterschieden wird, von welchem der retroreflektierenden Elemente die Laserstrahlung in die Scannereinrichtung zurück reflektiert wird.

Bei einer Weiterbildung grenzt an den retroreflektierenden Flächenbereich mindestens ein nicht retroreflektierender, beispielsweise absorbierender und/oder streuender Flächenbereich oder ein reflektierender (aber nicht retroreflektierender) Flächenbereich an. In diesem Fall kann ein z.B. plattenförmiges Kalibrierelement verwendet werden, dessen Oberfläche in retroreflektierende und nicht retroreflektierende, sich in ihren Streu- bzw. Reflexionseigenschaften stark von den retroreflektierenden Flächenbereichen unterscheidende Flächenbereiche unterteilt ist. Die Position der retroreflektierenden Flächenbereiche und der nicht retroreflektierenden Flächenbereiche auf dem Kalibrierelement ist aufgrund einer vorausgehenden Vermessung des Kalibrierelements mittels einer geeigneten Messtechnik genau bekannt.

Das Kalibrierelement kann beispielsweise in Form einer Retroreflektorfolie ausgebildet sein, auf deren Oberfläche eine hochpräzise Maske aufgebracht ist, die typischerweise mehrere nicht retroreflektierende, z.B. streuende, absorbierende oder reflektierende Flächenbereiche aufweist. Die Geometrie der hochpräzisen Maske wird beispielsweise mit Hilfe einer Koordinatenmessmaschine vor der Kalibration der Scannereinrichtung exakt vermessen und ist somit bekannt. Die nicht retroreflektierenden Flächenbereiche, welche die Maske bilden, können beispielswiese in der Art eines Schachbrettmusters angeordnet sein, es ist aber auch möglich, dass die nicht retroreflektierenden Flächenbereiche ein anderes regelmäßiges Muster, z.B. ein Gitter, oder ein unregelmäßiges Muster, z.B. in Form eines Punktmusters, bilden. Das Kalibrierelement kann beispielsweise auf einem Träger in der Bearbeitungskammer positioniert werden, auf den die Pulverschichten aufgetragen werden. Für die Anordnung des Kalibrierelements im Bearbeitungsfeld der Scannereinrichtung kann ebenfalls die weiter oben beschriebene Einrichtung zum Auftragen von Pulverschichten verwendet werden.

Bei einer Weiterbildung wird die Ist-Position des Laserstrahls in dem Bearbeitungsfeld anhand eines Unterschieds der Intensität der detektierten Laserstrahlung bei einem Übergang zwischen dem retroreflektierenden Flächenbereich und dem nicht retroreflektierenden Flächenbereich ermittelt. Der Laserstrahl kann in dem Bearbeitungsfeld entlang einer Bewegungsbahn bewegt werden, bei welcher der Laserstrahl mindestens einen Übergang zwischen einem retroreflektierenden Flächenbereich und einem nicht retroreflektierenden Flächenbereich überstreicht. Die in die Scannereinrichtung zurück reflektierte bzw. ggf. zurück gestreute Laserstrahlung wird detektiert und es kann anhand eines in der Regel sehr signifikanten Unterschieds in der detektierten Intensität an der Grenze zwischen dem retroreflektierenden Flächenbereich und dem nicht retroreflektierenden Flächenbereich die Ist-Position des Laserstrahls auf der Kalibriereinerichtung und somit auch in dem Bearbeitungsfeld ermittelt werden, da die Positionen der nicht retroreflektierenden Teilbereiche bzw. der Maske auf dem Kalibrierelement präzise vermessen wurden und somit bekannt sind. Die Ist-Position des Laserstrahls wird nachfolgend mit einer der Scannereinrichtung vorgegebenen Soll-Position verglichen, um ggf. auftretende Abweichungen zwischen der Ist-Position und der Soll-Position zu korrigieren, wozu die der Steuerung der Scannereinrichtung vorgegebenen Soll-Position geeignet angepasst werden. Es versteht sich, dass die Kalibration für eine Mehrzahl von Positionen in dem Bearbeitungsfeld vorgenommen werden kann, die jeweils an der Grenze zwischen einem retroreflektierenden Teilbereich und einem nicht retroreflektierenden Teilbereich gebildet sind, sofern der Scannereinrichtung für die Kalibrierung eine Sollbahn vorgegeben wird, bei welcher der Laserstrahl mehrere solche Grenzen überfährt. Durch den Vergleich zwischen den vorgegebenen Soll-Positionen und den Ist-Positionen des Laserstrahls an den jeweiligen Grenzen lassen sich die Projektionsfehler der Scannereinrichtung an mehreren Positionen in dem Bearbeitungsfeld ermitteln und erforderlichenfalls korrigieren bzw. kompensieren.

In einer weiteren Variante wird zum Kalibrieren der Scannereinrichtung ein Pilot-Laserstrahl verwendet. Der für das Kalibrieren verwendete Pilot-Laserstrahl weist typischerweise eine geringere Leistung auf als der für die Bestrahlung der Pulverschichten verwendete Bearbeitungs-Laserstrahl. Dies ist günstig, um eine Beschädigung des Retroreflektors durch den Laserstrahl zu vermeiden. Als Laserquelle kann beispielsweise ein Faserlaser verwendet werden, über dessen Faser auch der Pilot-Laserstrahl des Faserlasers übertragen wird, der eine geringere Leistung aufweist als der Bearbeitungs-Laserstrahl und der mit Hilfe der Scannereinrichtung in dem Bearbeitungsfeld positioniert wird. Auch die Wellenlänge des Pilot-Laserstrahls kann sich von der Wellenlänge des Bearbeitungs-Laserstrahls unterscheiden. Alternativ kann die Kalibrierung ggf. auch mit dem für die Bestrahlung bzw. für das Aufschmelzen der Pulverschichten verwendeten Bearbeitungs-Laserstrahl vorgenommen werden.

Bei einer weiteren Variante wird mindestens eine weitere Scannereinrichtung zur Ausrichtung eines weiteren Laserstrahls auf ein weiteres Bearbeitungsfeld, das in der Bearbeitungskammer gebildet ist, auf folgende Weise kalibriert: Detektieren von weiterer Laserstrahlung, die beim Überfahren des Retroreflektors mit dem weiteren Laserstrahl in die weitere Scannereinrichtung zurück reflektiert wird, Ermitteln einer Ist-Position des weiteren Laserstrahls in dem weiteren Bearbeitungsfeld anhand der detektierten weiteren Laserstrahlung, sowie Kalibrieren der weiteren Scannereinrichtung durch Korrigieren einer der weiteren Scannereinrichtung vorgegebenen Soll-Position anhand der ermittelten Ist-Position des weiteren Laserstrahls in dem weiteren Bearbeitungsfeld.

Bei einer Bearbeitungsmaschine zur Herstellung von dreidimensionalen Bauteilen werden häufig zwei oder mehr Bestrahlungseinrichtungen mit entsprechenden Scannereinrichtungen verwendet, die gleichzeitig betrieben und unabhängig voneinander angesteuert werden können, um die Herstellung von dreidimensionalen Bauteilen zu beschleunigen. Aufgrund des Aufschmelzens des Pulvermaterials erwärmt sich der Träger, auf dem die Pulverschichten aufgebracht werden, sowie der die Pulverschichten umgebende Bauzylinder typischerweise sehr stark, wodurch sich auch der Rest der Bearbeitungskammer erhitzt und ggf. deformiert, insbesondere wenn die Bearbeitungskammer zusätzlich geheizt wird. Daher kann die Kalibrierung der beiden Scannereinrichtungen relativ zueinander driften. Durch die Verwendung ein- und desselben Retroreflektors bzw. ein- und desselben Kalibrierelements für die Kalibration der beiden Scannereinrichtungen können die beiden Scannereinrichtungen relativ zueinander kalibriert werden. Das weitere Bearbeitungsfeld der weiteren Scannereinrichtung kann an das Bearbeitungsfeld der Scannereinrichtung angrenzen, einen Überlappungsbereich mit dem Bearbeitungsfeld der Scannereinrichtung aufweisen oder im Wesentlichen mit dem Bearbeitungsfeld der Scannereinrichtung übereinstimmen.

Bei einer weiteren Variante werden das Ermitteln der Ist-Position des Laserstrahls und das Ermitteln der Ist-Position des weiteren Laserstrahls zeitgleich durchgeführt. An dem Retroreflektor wird der jeweilige Laserstrahl direkt zu derjenigen der beiden Scannereinrichtungen zurück reflektiert, von der dieser ausgegangen ist, so dass die Laserstrahlung und die weitere Laserstrahlung von zwei unterschiedlichen Detektoren z.B. in Form von Fotodioden detektiert werden kann. Auf diese Weise kann die Kalibration der beiden Scannereinrichtungen zeitgleich durchgeführt werden, ohne dass dies zu einer unerwünschten Verfälschung der Messergebnisse durch die jeweils andere zurück reflektierte Laserstrahlung führt.

Ein weiterer Aspekt der Erfindung betrifft eine Bearbeitungsmaschine der eingangs genannten Art, umfassend das Merkmal des beigefügten unabhängigen Vorrichtungsanspruchs.

Wie weiter oben beschrieben wurde, dient die Bearbeitungsmaschine zum lokalen Aufschmelzen eines Pulverbetts bzw. einer Pulverschicht, die typischerweise in dem Bearbeitungsfeld der Scannereinrichtung angeordnet ist, um durch die so genannte "laser metal fusion" (LMF) eine Schicht des dreidimensionalen Bauteils zu erzeugen. Die Bestrahlungseinrichtung weist in der Regel zusätzlich zur Scannereinrichtung eine Fokussiereinrichtung auf, die zur Fokussierung des Laserstrahls in dem Bearbeitungsfeld dient. Die Fokussiereinrichtung kann adaptiv ausgebildet sein, um den Abstand zwischen der Scannereinrichtung und dem Bearbeitungsfeld zu verändern. Die Bestrahlungseinrichtung weist zusätzlich auch eine Laserquelle beispielsweise in Form eines Faserlasers auf.

Erfindungsgemäß umfasst die Bearbeitungsmaschine eine Bewegungseinrichtung zur Bewegung des mindestens einen Retroreflektors in das Bearbeitungsfeld der Scannereinrichtung (und aus dem Bearbeitungsfeld heraus).

Die Bewegungseinrichtung ermöglicht es, den Retroreflektor bzw. die Kalibriereinrichtung automatisiert in das Bearbeitungsfeld der Scannereinrichtung einzubringen. Auf diese Weise kann erforderlichenfalls eine Kalibration der Scannereinrichtung durchgeführt werden, während ein dreidimensionales Bauteil hergestellt wird, wobei zu diesem Zweck die Bearbeitung kurzfristig unterbrochen wird. Dies ist insbesondere für den Fall günstig, dass sich aufgrund einer starken Erwärmung die Bearbeitungskammer insgesamt deformiert wird bzw. sich verzieht, was ggf. eine Kalibration der Scannereinrichtung vor der vollständigen Fertigstellung eines dreidimensionalen Bauteils erforderlich macht.

Bei einer Weiterbildung ist die Bewegungseinrichtung zur Bewegung des mindestens eines Retroreflektors in das Bearbeitungsfeld der Scannereinrichtung als Einrichtung zum Auftragen von Pulverschichten ausgebildet. Beispielsweise kann es sich bei der Einrichtung um einen Arm handeln, an dem ein Schieber angebracht ist, um das Pulvermaterial zu dem Träger zu befördern und auf dessen Oberfläche bzw. auf dem Pulverbett zu verteilen.

Bei einer weiteren Ausführungsform ist der Retroreflektor als dreidimensionales Objekt, insbesondere als transparente Kugel, oder als retroreflektierender Flächenbereich ausgebildet. Im ersten Fall handelt es sich bei dem Retroreflektor um eine kleine Kugel mit einem Durchmesser typischerweise im Bereich von mehreren Mikrometern bis zu wenigen Millimetern. Im zweiten Fall kann es sich bei dem Retroreflektor beispielsweise um eine Retroreflektorfolie handeln, in der mikroskopisch kleine Kugeln, Prismen, etc. eingebettet oder eingekapselt sind. Auf die Retroreflektorfolie kann eine Maske aufgebracht sein, die ein Muster aus Flächenbereichen bildet, die keine retroreflektierenden Eigenschaften aufweisen.

Der Detektor ist bevorzugt koaxial zum Strahlengang des Laserstrahls in der Bestrahlungseinrichtung angeordnet, wobei die zur Scannereinrichtung zurück reflektierte Laserstrahlung beispielsweise über einen Strahlteiler, beispielsweise einen teiltransmissiven Umlenkspiegel, aus dem Strahlengang des Laserstrahls ausgekoppelt wird. Der Strahlteiler kann beispielsweise eine hochreflektierende dielektrische Beschichtung aufweisen, an der nur ein kleiner Anteil der Intensität der Laserstrahlung zu dem Detektor transmittiert wird. Die zurück reflektierte Laserstrahlung wird typischerweise über eine Abbildungseinrichtung, z.B. über eine Linse, auf dem Detektor fokussiert bzw. auf diesen abgebildet.

Bei einer weiteren Ausführungsform ist der Detektor als Diode ausgebildet, d.h. es handelt sich bei dem Detektor nicht um einen ortsauflösenden Detektor. Die Detektion der Intensität der Laserstrahlung mittels eines nicht ortsauflösenden Detektors ist im vorliegenden Fall ausreichend, da die Position des Laserstrahls in dem Bearbeitungsfeld mit Hilfe der Scannereinrichtung variiert werden kann. Ein Detektor in Form einer Diode kann ohnehin zur Prozessbeobachtung bei der Herstellung des dreidimensionalen Bauteils in der Bearbeitungsmaschine vorhanden sein, so dass dieser zusätzlich auch vorteilhaft für die Kalibration der Scannereinrichtung eingesetzt werden kann.

Bei einer weiteren Ausführungsform umfasst die Bearbeitungsmaschine zusätzlich eine weitere Scannereinrichtung zur Positionierung eines weiteren Laserstrahls in einem weiteren Bearbeitungsfeld, einen weiteren Detektor zur Detektion von weiterer Laserstrahlung, die beim Überfahren des Retroreflektors mit dem weiteren Laserstrahl von dem Retroreflektor in die Scannereinrichtung zurück reflektiert wird, eine weitere Auswerteeinrichtung zum Ermitteln einer Ist-Position des weiteren Laserstrahls in dem weiteren Bearbeitungsfeld anhand der detektierten weiteren Laserstrahlung, sowie eine weitere Steuerungseinrichtung zur Vorgabe einer Soll-Position des weiteren Laserstrahls in dem weiteren Bearbeitungsfeld, wobei die weitere Steuerungseinrichtung ausgebildet ist, die vorgegebene Soll-Position anhand der ermittelten Ist-Position zu korrigieren. Wie weiter oben beschrieben wurde, kann bei einer solchen Bearbeitungsmaschine, welche zwei oder mehr Scannereinrichtungen aufweist, eine insbesondere gleichzeitige Kalibration von zwei oder mehr Scannereinrichtungen mit Hilfe von ein- und demselben Retroreflektor realisiert werden.

Bei der hier beschriebenen Bearbeitungsmaschine können der ggf. bereits vorhandene Detektor zur Prozessbeobachtung und/oder die ebenfalls bereits vorhandene Einrichtung zum Auftragen von Pulverschichten auch für die Kalibration verwendet werden, so dass außer dem Retroreflektor keine zusätzlichen Messmittel für die Durchführung der Kalibration erforderlich sind. Zudem kann die Kalibration ggf. voll automatisiert ausgeführt werden, so dass einerseits Bedienungsfehler bei der Kalibration vermieden werden und sich andererseits der zeitliche Aufwand für die Kalibration drastisch reduziert.

Es zeigen:
- Fig. 1: eine schematische Darstellung eines Ausführungsbeispiels einer Bearbeitungsmaschine zur Herstellung von dreidimensionalen Bauteilen mit einem Retroreflektor in Form einer transparenten Kugel zur Kalibration einer Scannereinrichtung, sowie
- Fig. 2: eine Darstellung analog Fig. 1 mit Retroreflektoren in Form von retroreflektierenden Flächenbereichen eines Kalibrationselements für die gleichzeitigen Kalibration von zwei Scannereinrichtungen.

In der folgenden Beschreibung der Zeichnungen werden für gleiche bzw. funktionsgleiche Bauteile identische Bezugszeichen verwendet.

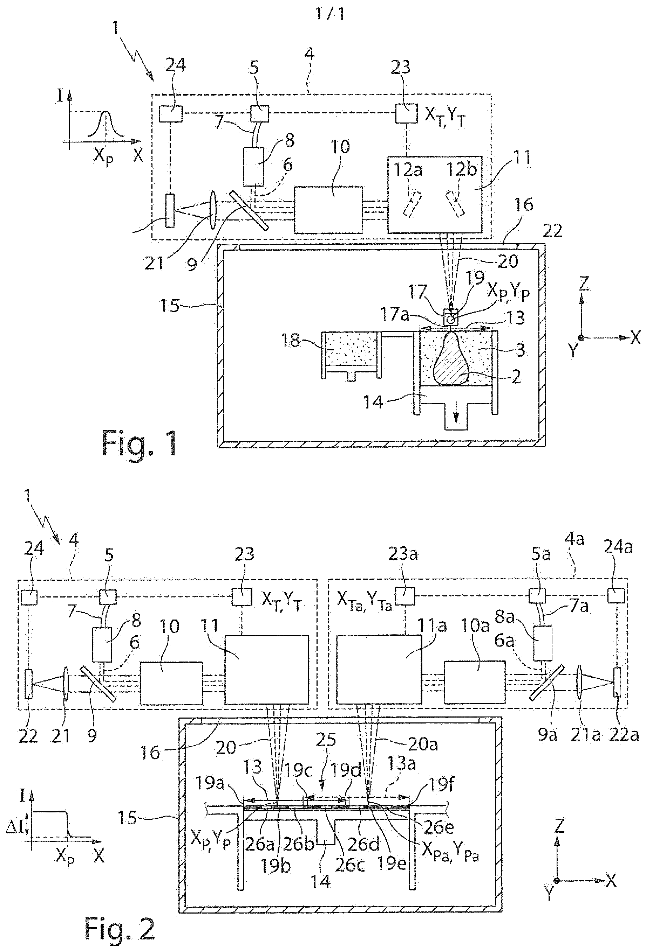

**Fig. 1** zeigt einen beispielhaften Aufbau einer Bearbeitungsmaschine 1 zum Herstellen eines dreidimensionalen Bauteils 2 durch Bestrahlen von Pulverschichten 3, die in dem in Fig. 1 gezeigten Beispiel übereinander liegend angeordnet sind und ein Pulverbett bilden, in welches das dreidimensionale Bauteil 2 eingebettet ist. Die Bearbeitungsmaschine 1 weist eine Bestrahlungseinrichtung 4 auf, die eine Laserquelle 5 in Form eines Faserlasers zur Erzeugung eines Laserstrahls 6 aufweist, der über ein Lichtleitkabel 7 und eine Kollimationseinrichtung 8 auf einen Umlenkspiegel 9 geführt wird. Bei dem Laserstrahl 6 handelt es sich im gezeigten Beispiel um einen Pilot-Laserstrahl, der für die Kalibration verwendet wird (s.u.). Für die Bestrahlung bzw. zum lokalen Aufschmelzen der Pulverschichten 3 wird ein Bearbeitungs-Laserstrahl mit höherer Leistung verwendet, der ebenfalls von der Laserquelle 5 in Form des Faserlasers erzeugt wird. Im gezeigten Beispiel weist der Pilot-Laserstrahl 6 eine Wellenlänge auf, die sich von der Wellenlänge des Bearbeitungs-Laserstrahls unterscheidet. Der Umlenkspiegel 9 weist bei dem in Fig. 1 gezeigten Beispiel eine dielektrische Beschichtung mit einer Reflektivität von mehr als ca. 99,9 % für die Wellenlänge des Bearbeitungs-Laserstrahls und eine Reflektivität von ca. 30 % bis ca. 80 % für die Wellenlänge des Pilot-Laserstrahls 6 auf, so dass ein überwiegender Anteil der Intensität des Pilot-Laserstrahls 6 an dem Umlenkspiegel 9 zu einer Fokussiereinrichtung 10 umgelenkt wird.

Der Laserstrahl 6 durchläuft nach der Fokussiereinrichtung 10 eine Scannereinrichtung 11, die zwei Scannerspiegel 12a, 12b in Form von Galvanometer-Spiegeln aufweist. Die Scannereinrichtung 10 dient zur Positionierung des Laserstrahls 6 in einem Bearbeitungsfeld 13 der Scannereinrichtung 10, welches bei dem in Fig. 1 gezeigten Beispiel im Wesentlichen der lateralen Erstreckung des Pulverbetts bzw. der Pulverschichten 3 entspricht. Die Fokussiereinrichtung 10 fokussiert den Laserstrahl in dem Bearbeitungsfeld 13, welches annähernd plan ist und einer XY-Ebene eines XYZ-Koordinatensystems entspricht, in der sich die oberste der Pulverschichten 3 bzw. die Oberseite des Pulverbetts befindet.

Wie in Fig. 1 ebenfalls zu erkennen ist, sind die Pulverschichten 3 auf einem Träger 14 in Form einer in Z-Richtung verschiebbaren Grundplatte aufgebracht. Der Träger 14 ist in einer Bearbeitungskammer 15 mit einem Fenster 16 angeordnet, durch das der Laserstrahl 6 in die Bearbeitungskammer 15 eingestrahlt wird. Da das Bearbeitungsfeld 13 der Scannereinrichtung 11, in dem das Pulvermaterial aufgeschmolzen wird, bei der Herstellung des dreidimensionalen Bauteils 2 in konstantem Abstand zur Scannereinrichtung 11 verbleibt, wird zum Auftragen einer neuen Pulverschicht 3 der Träger 14 um die Dicke einer Pulverschicht 3 abgesenkt.

Neues Pulvermaterial wird mit Hilfe einer Einrichtung 17 zum Auftragen von (neuen) Pulverschichten 3 aus einem ebenfalls in der Bearbeitungskammer 15 angeordneten Pulverreservoir 18 entnommen. Die Einrichtung 17 zum Auftragen von neuen Pulverschichten 3 ist bei dem in Fig. 1 gezeigten Beispiel in Form eines verschiebbaren Arms ausgebildet, an dessen Unterseite ein Schieber 17a angebracht ist, um Pulvermaterial aus dem Pulverreservoir 18 in den Bereich der Pulverschichten 3 bzw. an die Oberseite des Pulverbetts zu verbringen, das sich oberhalb des Trägers 14 in dem diesen umgebenden Bauzylinder befindet.

Bei dem in Fig. 1 gezeigten Beispiel ist an einer leicht geneigten Fläche an der Oberseite der als verschiebbarer Arm ausgebildeten Einrichtung 17 (Pulverschieber) zum Auftragen der Pulverschichten 3, der sich im gezeigten Beispiel in Y-Richtung, d.h. senkrecht zur Zeichenebene erstreckt, ein Retroreflektor 19 in Form eines dreidimensionalen Objekts, genauer gesagt einer transparenten Kugel aus Quarzglas, angebracht. Es versteht sich, dass der Retroreflektor 19 auch an anderer Stelle an dem Arm befestigt werden kann. Der Retroreflektor 19 in Form der Kugel weist im gezeigten Beispiel einen Durchmesser von ca. 4 mm auf und reflektiert Laserstrahlung 20, die einen Anteil von z.B. mehr als 5 % der Intensität des Laserstrahls 6 ausmacht, zurück in die Scannereinrichtung 11, und zwar im Wesentlichen unabhängig vom Einfallswinkel, unter dem der Laserstrahl 6 auf den Retroreflektor 19 trifft. Der Durchmesser des Retroreflektors 19 in Form der Kugel kann auch kleiner sein als 1 mm, beispielsweise bei ca. 100 µm oder weniger liegen. Aus Handhabungsgründen ist es aber vorteilhaft, wenn der Retroreflektor 19 einen Durchmesser von ca. 1 mm oder darüber aufweist. Bei dem in Fig. 1 gezeigten Beispiel trifft der Laserstrahl 6 im Wesentlichen senkrecht zur XY-Ebene, in der auch die jeweiligen Pulverschichten 3 verlaufen, auf den Retroreflektor 19 auf, es versteht sich aber, dass an dem Retroreflektor 19 auch bei einer von einem senkrechten Einfall abweichenden Einfallsrichtung des Laserstrahls 6 ein erheblicher Strahlungsanteil des Laserstrahls 6 von typischerweise mehr als ca. 5 % zur Scannereinrichtung 11 zurück reflektiert wird.

Die zurückreflektierte Laserstrahlung 20 durchläuft die Scannereinrichtung 11 sowie die Fokussiereinrichtung 10 in umgekehrter Richtung zum Laserstrahl 6 und trifft auf den Umlenkspiegel 9. An dem Umlenkspiegel 9 wird ein geringer Anteil der zurückreflektierten Laserstrahlung 20 transmittiert und mit Hilfe einer Abbildungseinrichtung 21, die bei dem in Fig. 1 gezeigten Beispiel als Linse ausgebildet ist, auf einen Detektor 22 in Form einer Fotodiode abgebildet bzw. fokussiert. Der Detektor 22 bzw. die Fotodiode ist koaxial zum Strahlengang des Laserstrahls 6 angeordnet und detektiert im Wesentlichen Laserstrahlung 20, die von einer Ist-Position X_{P}, Y_{P} des Laserstrahls 6 in dem Bearbeitungsfeld 13 ausgeht, an der bei dem in Fig. 1 gezeigten Beispiel der Retroreflektor 19 angeordnet ist und die von diesem zur Scannereinrichtung 11 zurück reflektiert wird.

Die Ist-Position X_{P}, Y_{P} des Laserstrahls 6 kann z.B. aufgrund von Abbildungsfehlern von einer Soll-Position X_{T}, Y_{T} abweichen, die der Scannereinrichtung 11 von einer Steuerungseinrichtung 23 vorgegeben wird, was zu Abweichungen bei der Projektion eines Musters auf das Bearbeitungsfeld 13 führen kann, welches der flächigen Geometrie einer Ebene des dreidimensionalen Bauteils entspricht. Um ein solches Muster möglichst präzise in das Bearbeitungsfeld 13 zu übertragen, ist eine Kalibration der Scannereinrichtung 13 erforderlich, bei erforderlichenfalls die der Scannereinrichtung 11 vorgegebenen Soll-Position X_{T}, Y_{T} so korrigiert wird, dass diese der Ist-Position X_{P}, Y_{P} in dem Bearbeitungsfeld 13 entspricht. Zu diesem Zweck ist es erforderlich, die Projektionsfehler der Scannereinrichtung, d.h. die Abweichung zwischen der Soll-Position X_{T}, Y_{T} und den Ist-Position X_{P}, Y_{P} möglichst präzise zu bestimmen.

Um dies zu erreichen, kann wie nachfolgend beschrieben vorgegangen werden: Der Retroreflektor 19 wird an einer vorgegebenen Reflektor-Position in dem Bearbeitungsfeld 13 angeordnet und der Scannereinrichtung 11 wird eine Soll-Position X_{T}, Y_{T} vorgegeben, die nominell der vorgegebenen Reflektor-Position in dem Bearbeitungsfeld 13 entspricht. Die Scannereinrichtung 11 scannt einen Bereich des Bearbeitungsfeldes 13 um die nominelle Reflektor-Position herum ab, wobei jeweils die zurück reflektierte Laserstrahlung 20 detektiert wird, d.h. der Laserstrahl 6 überfährt den Retroreflektor 19 mehrfach in einer scannenden Bewegung. Die Ist-Position X_{P}, Y_{P} des Laserstrahls 6 wird anhand der Intensitätsverteilung I(X, Y) der detektierten Laserstrahlung 20 in einer Auswerteeinrichtung 24 ermittelt. Die Ermittlung der Ist-Position X_{P}, Y_{P} kann beispielsweise auf die nachfolgend beschriebene Weise erfolgen:
Zunächst wird in von der Auswerteeinrichtung 24 die zweidimensionale Intensitätsverteilung I(X,Y) (Bitmap) der beim mehrfachen Überfahren des Retroreflektors 19 detektierten Laserstrahlung 20 aufgenommen. In Fig. 1 ist beispielhaft die beim Abscannen des Retroreflektors 19 aufgenommene eindimensionale Intensitätsverteilung I(X) dargestellt, die durch das Zentrum der zweidimensionalen Intensitätsverteilung I(X, Y) verläuft. Mit Hilfe eines Bildauswertealgorithmus wird ein Intensitätsschwerpunkt der Intensitätsverteilung I(X, Y) bestimmt, der bei dem in Fig. 1 gezeigten Beispiel, bei dem der Laserstrahl 6 eine rotationssymmetrische Intensitätsverteilung I(X, Y) aufweist, dem Intensitätsmaximum in X-Richtung sowie in Y-Richtung entspricht. Der Schwerpunkt der Intensitätsverteilung I(X, Y) der detektierten Laserstrahlung 20 bildet die Retroreflektor-Position, d.h. diejenige Ist-Position X_{P}, Y_{P} des Laserstrahls 6, die eigentlich mit derjenigen Soll-Position X_{T}, Y_{T} übereinstimmen sollte, die der Scannereinrichtung 11 von der Steuerungseinrichtung 23 (ursprünglich) vorgegeben wurde.

In dem oben beschriebenen Fall besteht eine Abweichung zwischen der Ist-Position X_{P}, Y_{P} des Laserstrahls 6 bzw. der Reflektor-Position zur der der Scannereinrichtung 11 durch die Steuerungseinrichtung 23 (ursprünglich) vorgegebenen Soll-Position X_{T}, Y_{T}. Diese Abweichung wird korrigiert, beispielsweise indem die Differenz zwischen der Soll-Position X_{T}, Y_{T} und der Ist-Position X_{P}, Y_{P} ermittelt und die Soll-Position X_{T}, Y_{T} in der Steuerungseinrichtung 23 entsprechend angepasst wird, so dass die Ist-Position X_{P}, Y_{P} und die Soll-Position X_{T}, Y_{T} übereinstimmen. Zu diesem Zweck übermittelt die Auswerteeinrichtung 24 die ermittelte Ist-Position X_{P}, Y_{P} der Steuerungseinrichtung 23.

Bei dem in Fig. 1 gezeigten Beispiel können mehrere Retroreflektoren 19 in Form von dreidimensionalen Objekten, z.B. in Form von transparenten Kugeln, entlang der Einrichtung 17 zum Auftragen der Pulverschichten 3 angeordnet sein, um die Scannereinrichtung 11 an mehreren Ist-Positionen X_{P}, Y_{P} des Bearbeitungsfeldes 13 zu kalibrieren. Insbesondere können mehrere Retroreflektoren 19 in Y-Richtung nebeneinander angeordnet werden, um für mehrere Ist-Positionen X_{P}, Y_{P} des Laserstrahls 6 in Y-Richtung eine Kalibrierung der Scannereinrichtung 11 durchzuführen. Dies ist insbesondere deshalb günstig, da bei dem in Fig. 1 gezeigten Beispiel die Bewegungsachse der Einrichtung 17 zum Transport von Pulvermaterial aus dem Pulverreservoir 18 in den Bereich der Pulverschichten 3 in X-Richtung verläuft, so dass eine Bewegung der Einrichtung 17 in Y-Richtung ggf. nicht möglich ist. Um die Kalibrierung der Scannereinrichtung 11 an unterschiedlichen Ist-Positionen X_{P}, Y_{P} des Laserstrahls 6 in dem Bearbeitungsfeld 13 in X-Richtung zu ermöglichen, ist es hingegen ausreichend, die Einrichtung 17 in X-Richtung zu verschieben.

**Fig. 2** zeigt eine Bearbeitungsmaschine 1, die sich von der in Fig. 1 gezeigten Bearbeitungsmaschine 1 im Wesentlichen dadurch unterscheidet, dass diese eine weitere Bestrahlungseinrichtung 4a aufweist, die identisch zu der in Fig. 1 gezeigten Bestrahlungseinrichtung 4 aufgebaut ist, d.h. diese umfasst eine weitere Scannereinrichtung 11a zur Positionierung eines weiteren Laserstrahls 6a in einem weiteren Bearbeitungsfeld 13a, welches sich teilweise mit dem Bearbeitungsfeld 13 der Scannereinrichtung 11 überlappt. Beide Bestrahlungseinrichtungen 4, 4a werden zur Herstellung desselben dreidimensionalen Bauteils verwendet, welches analog zu Fig. 1 durch das lokale Aufschmelzen von in Fig. 2 nicht gezeigten Pulverschichten erzeugt wird, die auf einen Träger 14 aufgebracht werden, der von einem Bauzylinder umschlossen wird.

Bei dem in Fig. 2 gezeigten Beispiel ist ein Kalibrierelement in Form einer Kalibrationsplatte 25 in der Bearbeitungskammer 15 angeordnet, welche mit Hilfe einer (in Fig. 2 nicht dargestellten) Einrichtung 17 zum Auftragen von Pulverschichten 3 in die jeweiligen Bearbeitungsfelder 13, 13a der beiden Scannereinrichtungen 11, 11a eingebracht wird. Im gezeigten Beispiel wurde die Kalibrierplatte 25 direkt auf dem Träger 14 abgelegt.

Die Kalibrierplatte 25 weist bei dem in Fig. 2 gezeigten Beispiel eine Mehrzahl von Retroreflektoren 19a-f in Form von retroreflektierenden Flächenbereichen auf, zwischen denen eine Mehrzahl von nicht retroreflektierenden, genauer gesagt den Laserstrahl 6 absorbierenden Flächenbereichen 26a-e gebildet sind. Die Retroreflektoren 19a-e in Form der retroreflektierenden Flächenbereiche sind bei dem in Fig. 2 gezeigten Beispiel an einer Retroreflektorfolie gebildet, in die Mikrokugeln eingebettet sind, um die retroreflektierenden Eigenschaften zu erzeugen. Anders als in Fig. 2 dargestellt ist, sind die absorbierenden Flächenbereiche 26a-e in Form einer Präzisionsmaske auf die Retroreflektorfolie aufgebracht, d.h. die Retroreflektorfolie wird in den entsprechenden Flächenbereichen 26a-e von den absorbierenden Flächenbereichen 26a-e abgedeckt. Die Retroreflektorfolie ist auf einem in Fig. 2 nicht gezeigten Substrat aufgebracht. Alternativ oder zusätzlich zu absorbierenden Flächenbereichen 26a-e kann die Kalibrationsplatte 25 streuende Flächenbereiche 26a-e oder reflektierende, aber nicht retroreflektierende Flächenbereiche 26a-e aufweisen.

Die Kalibrierung der Scannereinrichtungen 13, 13a mit Hilfe der Kalibrationsplatte 25 erfolgt analog zu dem in Zusammenhang mit Fig. 1 beschriebenen Verfahren und unterscheidet sich lediglich bei der Ermittlung der Ist-Position X_{P}, Y_{P} des Laserstrahls 6 in dem Bearbeitungsfeld 13. Bei der Kalibrationsplatte 25 sind die Positionen der absorbierenden Flächenbereiche 26a-e genau bekannt, da diese mittels eines geeigneten Messverfahrens vorab vermessen wurden.

Für die Kalibrierung der Scannereinrichtung 11 wird der Laserstrahl 6 entlang einer Bewegungsbahn in dem Bearbeitungsfeld 13 bewegt, bei der mindestens eine Grenze zwischen einem retroreflektierenden Flächenbereich 19a-e und einem benachbarten absorbierenden Flächenbereich 26a-e überfahren wird. Die bei der Bewegung des Laserstrahls 6 in X-Richtung von dem Detektor 22 in Form der Fotodiode gemessene Intensität I weist z.B. am Übergang zwischen dem retroreflektierenden Flächenbereich 19b und dem angrenzenden absorbierenden Flächenbereich 26b einen Sprung bzw. eine signifikante Intensitätsdifferenz ΔI auf. Dieser Unterschied ΔI in der Intensität I der detektieren Laserstrahlung 20 wird von der Auswerteeinrichtung 24 erkannt und einer Ist-Position X_{P}, Y_{P} des Laserstrahls 6 in dem Bearbeitungsfeld 13 zugeordnet. Es versteht sich, dass die Kalibration für eine Mehrzahl von Positionen in dem Bearbeitungsfeld 13 vorgenommen werden kann, die jeweils an der Grenze zwischen einem retroreflektierenden Flächenbereich 19a-f und einem absorbierenden Flächenbereich 24a-e gebildet sind, wenn der Scannereinrichtung 11 eine Sollbahn vorgegeben wird, bei welcher der Laserstrahl 6 mehrere solcher Grenzen überfährt.

Die Kalibrierung der weiteren Scannereinrichtung 13a erfolgt analog, d.h. es wird die von der Kalibrationsplatte 25 in die weitere Scannereinrichtung 13a zurück reflektierte weitere Laserstrahlung 20a, die über eine weitere Fokussiereinrichtung 10a und einen weiteren Umlenkspiegel 9a sowie eine weitere Abbildungseinrichtung 21a auf einen weiteren Detektor 22a gelangt, von einer weiteren Auswerteeinrichtung 24a ausgewertet und das Ergebnis der Auswertung einer weiteren Steuerungseinrichtung 23a zur Verfügung gestellt, um die Soll-Werte X_{Ta}, Y_{Ta} an die von der weiteren Auswerteeinrichtung 24a ermittelten Ist-Werte X_{Pa} , Y_{Pa} anzupassen. Aufgrund der Verwendung der Retroreflektoren 19a-e, an denen ein wesentlicher Anteil der Intensität I des Laserstrahls 6 in die Scannereinrichtung 11 bzw. der Intensität I des weiteren Laserstrahls 6a in die weitere Scannereinrichtung 11a zurück reflektiert wird, kann die Kalibration der beiden Scannereinrichtungen 11, 11a gleichzeitig durchgeführt werden, ohne dass es zu signifikanten Messfehlern kommt, d.h. die Ermittlung der Ist-Position X_{P}, Y_{P} des Laserstrahls 6 sowie die Ermittlung der Ist-Position X_{Pa}, Y_{Pa} des Laserstrahls 6 können zeitparallel durchgeführt werden.

## Patentansprüche

1. Verfahren zum Kalibrieren einer Scannereinrichtung (11) zur Positionierung eines Laserstrahls (6) in einem Bearbeitungsfeld (13),
umfassend:
Anordnen mindestens eines Retroreflektors (19, 19a-e) in dem Bearbeitungsfeld (13) der Scannereinrichtung (11), das in einer Bearbeitungskammer (15) zum Bestrahlen von Pulverschichten (3) gebildet ist,
Detektieren von Laserstrahlung (20), die beim Überfahren des Retroreflektors (19, 19a-e) mit dem Laserstrahl (6) in die Scannereinrichtung (11) zurück reflektiert wird,
Ermitteln einer Ist-Position (X_{P}, Y_{P}) des Laserstrahls (6) in dem Bearbeitungsfeld (13) anhand der detektierten Laserstrahlung (20),
sowie
Kalibrieren der Scannereinrichtung (11) durch Korrigieren einer der Scannereinrichtung (11) vorgegebenen Soll-Position (X_{T}, Yr) des Laserstrahls (6) in dem Bearbeitungsfeld (13) anhand der ermittelten Ist-Position (X_{P}, Y_{P}) des Laserstrahls (6) in dem Bearbeitungsfeld (13), wobei der Retroreflektor (19, 19a-e) automatisiert in dem Bearbeitungsfeld (13) der Scannereinrichtung (11) angeordnet wird, indem der Retroreflektor (19, 19a-e) an einer beweglichen Einrichtung (17) in das Bearbeitungsfeld (13) der Scannereinrichtung (11) bewegt wird.

2. Verfahren nach Anspruch 1, bei dem der Retroreflektor (19, 19a-e) an einer beweglichen Einrichtung (17) zum Auftragen der Pulverschichten (3) in das Bearbeitungsfeld (13) der Scannereinrichtung (11) bewegt wird.

3. Verfahren nach Anspruch 1 oder 2, bei dem der Laserstrahl (6) an einem Retroreflektor in Form eines dreidimensionalen Objekts in die Scannereinrichtung (11) zurück reflektiert wird.

4. Verfahren nach Anspruch 3, bei dem die Ist-Position (X_{P}, Y_{P}) des Laserstrahls (6) in dem Bearbeitungsfeld (13) anhand einer Intensitätsverteilung (I(X, Y)) der detektierten zurück reflektierten Laserstrahlung (20) ermittelt wird.

5. Verfahren nach Anspruch 1 oder 2, bei dem der Laserstrahl (6) an mindestens einem Retroreflektor in Form eines retroreflektierenden Flächenbereichs (19a-f) in die Scannereinrichtung (11) zurück reflektiert wird.

6. Verfahren nach Anspruch 5, bei dem an den retroreflektierenden Flächenbereich (19a-f) mindestens ein absorbierender und/oder streuender Flächenbereich (26a-e) angrenzt.

7. Verfahren nach Anspruch 6, bei dem die Ist-Position (X_{P}, Y_{P}) des Laserstrahls (6) in dem Bearbeitungsfeld (13) anhand eines Unterschieds (ΔI) der Intensität (I) der detektierten Laserstrahlung (20) an einem Übergang zwischen dem retroreflektierenden Flächenbereich (19a-f) und dem absorbierenden und/oder streuenden Flächenbereich (26a-e) ermittelt wird.

8. Verfahren nach einem der vorhergehenden Ansprüche, weiter umfassend:
Kalibrieren mindestens einer weiteren Scannereinrichtung (11a) zur Ausrichtung eines weiteren Laserstrahls (6a) auf ein weiteres Bearbeitungsfeld (13a), das in der Bearbeitungskammer (15) gebildet ist, umfassend:
Detektieren von weiterer Laserstrahlung (20a), die beim Überfahren des Retroreflektors (19a-e) mit dem weiteren Laserstrahl (6a) in die weitere Scannereinrichtung (11a) zurück reflektiert wird,
Ermitteln einer Ist-Position (X_{Pa}, Y_{Pa}) des weiteren Laserstrahls (6a) in dem weiteren Bearbeitungsfeld (13a) anhand der detektierten weiteren Laserstrahlung (20a), sowie
Kalibrieren der weiteren Scannereinrichtung (11a) durch Korrigieren einer der weiteren Scannereinrichtung (11a) vorgegebenen Soll-Position (X_{Ta}, Yra) anhand der ermittelten Ist-Position (X_{Pa}, Y_{Pa}) des weiteren Laserstrahls (6a) in dem weiteren Bearbeitungsfeld (13a).

9. Verfahren nach Anspruch 8, bei dem das Ermitteln der Ist-Position (Xp, Yp) des Laserstrahls (6) und das Ermitteln der Ist-Position (X_{Pa}, Y_{Pa}) des weiteren Laserstrahls (6a) zeitgleich durchgeführt werden.

10. Bearbeitungsmaschine (1) zum Herstellen von dreidimensionalen Bauteilen (2) durch Bestrahlen von Pulverschichten (3), umfassend:
eine Bestrahlungseinrichtung (4) mit einer Scannereinrichtung (11) zum Positionieren eines Laserstrahls (6) in einem Bearbeitungsfeld (13),
eine Bearbeitungskammer (15), in der das Bearbeitungsfeld (13) gebildet ist und die einen Träger (14) zum Aufbringen der Pulverschichten (3) aufweist,
mindestens einen Retroreflektor (19, 19a-f), der in dem Bearbeitungsfeld (13) der Scannereinrichtung (11) angeordnet ist,
einen Detektor (22) zur Detektion von Laserstrahlung (20), die beim Überfahren des Retroreflektors (19, 19a-f) mit dem Laserstrahl (6) von dem Retroreflektor (19, 19a-f) in die Scannereinrichtung (11) zurück reflektiert wird,
eine Auswerteeinrichtung (24) zum Ermitteln einer Ist-Position (Xp, Yp) des Laserstrahls (6) in dem Bearbeitungsfeld (13) anhand der detektierten Laserstrahlung (20),
eine Steuerungseinrichtung (23) zur Vorgabe einer Soll-Position (X_{T}, Y_{T}) des Laserstrahls (6) in dem Bearbeitungsfeld (13), wobei die Steuerungseinrichtung (23) ausgebildet ist, die vorgegebene Soll-Position (X_{T}, Yr) anhand der ermittelten Ist-Position (X_{P}, Yp) zu korrigieren, sowie
eine Bewegungseinrichtung (17) zur Bewegung des mindestens einen Retroreflektors (19, 19a-f) in das Bearbeitungsfeld (13) der Scannereinrichtung (11).

11. Bearbeitungsmaschine nach Anspruch 10, bei der die Bewegungseinrichtung zur Bewegung des mindestens eines Retroreflektors (19, 19a-f) in das Bearbeitungsfeld (13) der Scannereinrichtung (11) als Einrichtung (17) zum Auftragen von Pulverschichten (3) ausgebildet ist.

12. Bearbeitungsmaschine nach Anspruch 10 oder 11, bei welcher der Retroreflektor als dreidimensionales Objekt oder als retroreflektierender Flächenbereich (19a-f) ausgebildet ist.

13. Bearbeitungsmaschine nach einem der Ansprüche 10 bis 12, bei welcher der Detektor als Diode (22) ausgebildet ist.

14. Bearbeitungsmaschine nach einem der Ansprüche 10 bis 13, weiter umfassend:
eine weitere Scannereinrichtung (11a) zur Positionierung eines weiteren Laserstrahls (6a) in einem weiteren Bearbeitungsfeld (13a),
einen weiteren Detektor (22a) zur Detektion von weiterer Laserstrahlung (22a), die beim Überfahren des Retroreflektors (19, 19a-f) mit dem weiteren Laserstrahl (6a) von dem Retroreflektor (19, 19a-f) in die weitere Scannereinrichtung (11a) zurück reflektiert wird,
eine weitere Auswerteeinrichtung (24a) zum Ermitteln einer Ist-Position (X_{Pa}, Y_{Pa}) des weiteren Laserstrahls (6a) in dem weiteren Bearbeitungsfeld (13a) anhand der detektierten weiteren Laserstrahlung (20a), sowie
eine weitere Steuerungseinrichtung (23a) zur Vorgabe einer Soll-Position (X_{Ta}, Y_{Ta}) des weiteren Laserstrahls (6a) in dem weiteren Bearbeitungsfeld (13a), wobei die weitere Steuerungseinrichtung (23a) ausgebildet ist, die vorgegebene Soll-Position (X_{Ta}, Y_{Ta}) anhand der ermittelten Ist-Position (X_{Pa}, Y_{Pa}) zu korrigieren.

## Claims

1. A method for calibrating a scanner (11) for positioning a laser beam (6) in a machining field (13),
comprising:
arranging at least one retroreflector (19, 19a-e) in the machining field (13) of the scanner (11), which is formed in a machining chamber (15) for irradiating powder layers (3),
detecting laser radiation (20) which is reflected back into the scanner (11) when the laser beam (6) passes over the retroreflector (19, 19a-e),
determining an actual position (X_{P}, Y_{P}) of the laser beam (6) in the machining field (13) based on the detected laser radiation (20),
and
calibrating the scanner (11) by correcting one of the target position (X_{T}, Y_{T}) of the laser beam (6) in the machining field (13) specified for the scanner (11) based on the determined actual position (X_{P}, Y_{P}) of the laser beam (6) in the machining field (13), wherein the retroreflector (19, 19a-e) is automatically arranged in the machining field (13) of the scanner (11) by moving the retroreflector (19, 19a-e) on a movable device (17) into the machining field (13) of the scanner (11).

2. The method according to claim 1, in which the retroreflector (19, 19a-e) is moved on a movable device (17) for applying the powder layers (3) into the machining field (13) of the scanner (11).

3. The method according to claim 1 or 2, in which the laser beam (6) is reflected back into the scanner (11) at a retroreflector in the form of a three-dimensional object.

4. The method according to claim 3, in which the actual position (X_{P}, Y_{P}) of the laser beam (6) in the machining field (13) is determined using an intensity distribution (I(X, Y)) of the detected back-reflected laser radiation (20).

5. The method according to claim 1 or 2, in which the laser beam (6) is reflected back into the scanner (11) on at least one retroreflector in the form of a retroreflective surface area (19a-f).

6. The method according to claim 5, in which at least one absorbing and/or scattering surface area (26a-e) adjoins the retroreflective surface area (19a-f).

7. The method according to claim 6, in which the actual position (X_{P}, Y_{P}) of the laser beam (6) in the machining field (13) is determined based on a difference (ΔI) in the intensity (I) of the detected laser radiation (20) at a transition between the retroreflective surface area (19a-f) and the absorbing and/or scattering surface area (26a-e).

8. The method according to any one of the previous claims, further comprising:
calibrating at least one further scanner (11a) for aligning a further laser beam (6a) onto a further machining field (13a) which is formed in the machining chamber (15), comprising:
detecting further laser radiation (20a), which is reflected back into the further scanner (11a) when the further laser beam (6a) passes over the retroreflector (19a-e),
determining an actual position (X_{Pa}, Y_{Pa}) of the further laser beam (6a) in the further machining field (13a) based on the detected further laser radiation (20a), and
calibrating the further scanner (11a) by correcting a target position (X_{Ta}, Y_{Ta}) specified for the further scanner (11a) based on the determined actual position (X_{Pa}, Y_{Pa}) of the further laser beam (6a) in the further machining field (13a).

9. The method according to claim 8, in which determining the actual position (X_{P}, Y_{P}) of the laser beam (6) and determining the actual position (X_{Pa}, Y_{Pa}) of the further laser beam (6a) can be performed at the same time.

10. A machining device (1) for producing three-dimensional components (2) by irradiating powder layers (3), comprising:
an irradiation device (4) with a scanner (11) for positioning a laser beam (6) in a machining field (13),
a machining chamber (15), in which the machining field (13) is formed and which has a carrier (14) for applying the powder layers (3),
at least one retroreflector (19, 19a-f) which is arranged in the machining field (13) of the scanner (11),
a detector (22) for detecting laser radiation (20), which is reflected back from the retroreflector (19, 19a-f) into the scanner (11) when the laser beam (6) passes over the retroreflector (19, 19a-f),
an evaluation device (24) for determining an actual position (X_{P}, Y_{P}) of the laser beam (6) in the machining field (13) based on the detected laser radiation (20),
a control device (23) for specifying a target position (X_{T}, Y_{T}) of the laser beam (6) in the machining field (13), wherein the control device (23) is designed to correct the predetermined target position (X_{T}, Y_{T}) based on the determined actual position (X_{P}, Y_{P}), and
a movement device (17) for moving the at least one retroreflector (19, 19a-f) into the machining field (13) of the scanner (11).

11. The machining device according to claim 10, in which the movement device for moving the at least one retroreflector (19, 19a-f) into the machining field (13) of the scanner (11) is designed as a device (17) for applying powder layers (3).

12. The machining device according to claim 10 or 11, in which the retroreflector is designed as a three-dimensional object or as a retroreflective surface area (19a-f).

13. The machining device according to any one of claims 10 to 12, in which the detector is designed as a diode (22).

14. The machining device according to any one of claims 10 to 13, further comprising:
a further scanner (11a) for positioning a further laser beam (6a) in a further machining field (13a),
a further detector (22a) for detecting further laser radiation (22a), which is reflected back from the retroreflector (19, 19a-f) into the further scanner (11a) when the further laser beam (6a) passes over the retroreflector (19, 19a-f),
a further evaluation device (24a) for determining an actual position (X_{Pa}, Y_{Pa}) of the further laser beam (6a) in the further machining field (13a) based on the detected further laser radiation (20a), and
a further control device (23a) for specifying a target position (X_{Ta}, Y_{Ta}) of the further laser beam (6a) in the further machining field (13a), wherein the further control device (23a) is formed to correct the specified target position (X_{Ta}, Y_{Ta}) based on the determined actual position (X_{Pa}, Y_{Pa}).

## Revendications

1. Procédé d'étalonnage d'un dispositif balayeur (11) permettant de positionner un faisceau laser (6) dans un champ d'usinage (13),
comprenant :
l'agencement d'au moins un rétroréflecteur (19, 19a-e) dans le champ d'usinage (13) du dispositif balayeur (11), lequel est formé dans une chambre d'usinage (15) pour exposer des couches de poudre (3) à un rayonnement,
la détection d'un rayonnement laser (20), lequel, lors du passage du rétroréflecteur (19, 19a-e) avec le faisceau laser (6), est rétroréfléchi vers le dispositif balayeur (11),
la détermination d'une position réelle (X_{P}, Y_{P}) du faisceau laser (6) dans le champ d'usinage (13) en fonction du rayonnement laser (20) détecté,
ainsi que
l'étalonnage du dispositif balayeur (11) par correction d'une position de consigne (X_{T}, Y_{T}), prédéterminée par le dispositif balayeur (11), du faisceau laser (6) dans le champ d'usinage (13) en fonction de la position réelle (X_{P}, Y_{P}) déterminée du faisceau laser (6) dans le champ d'usinage (13), dans lequel le rétroréflecteur (19, 19a-e) est disposé de manière automatisée dans le champ d'usinage (13) du dispositif de balayeur (11), le rétroréflecteur (19, 19a -e) étant déplacé sur un dispositif (17) mobile dans le champ d'usinage (13) du dispositif balayeur (11).

2. Procédé selon la revendication 1, dans lequel le rétroréflecteur (19, 19a-e) est déplacé sur le dispositif (17) mobile pour appliquer les couches de poudre (3) dans le champ d'usinage (13) du dispositif balayeur (11).

3. Procédé selon la revendication 1 ou 2, dans lequel le faisceau laser (6), sur un rétroréflecteur sous la forme d'un objet tridimensionnel, est rétroréfléchi vers le dispositif balayeur (11).

4. Procédé selon la revendication 3, dans lequel la position réelle (X_{P}, Y_{P}) du faisceau laser (6) dans le champ d'usinage (13) est déterminée en fonction d'une distribution d'intensité (I (X, Y)) du rayonnement laser (20) rétroréfléchi détecté.

5. Procédé selon la revendication 1 ou 2, dans lequel le faisceau laser (6), sur au moins un rétroréflecteur sous la forme d'une zone de surface rétroréfléchissante (19a-f), est rétroréfléchi vers le dispositif balayeur (11).

6. Procédé selon la revendication 5, dans lequel au moins une zone de surface absorbante et/ou diffusante (26a-e) est adjacente à la zone de surface rétroréfléchissante (19a-f).

7. Procédé selon la revendication 6, dans lequel la position réelle (X_{P}, Y_{P}) du faisceau laser (6) dans le champ d'usinage (13) est déterminée en fonction d'une différence (ΔI) de l'intensité (I) du rayonnement laser (20) détecté au niveau d'une transition entre la zone de surface rétroréfléchissante (19a-f) et la zone de surface absorbante et/ou diffusante (26a-e).

8. Procédé selon l'une quelconque des revendications précédentes, comprenant en outre :
l'étalonnage d'au moins un autre dispositif balayeur (11a) permettant d'aligner un autre faisceau laser (6a) sur un autre champ d'usinage (13a), lequel est formé dans la chambre d'usinage (15), comprenant :
la détection d'un autre rayonnement laser (20a), lequel, lors du passage du rétroréflecteur (19a-e) avec l'autre faisceau laser (6a), est rétroréfléchi vers l'autre dispositif balayeur (11a),
la détermination d'une position réelle (X_{Pa}, Y_{Pa}) de l'autre faisceau laser (6a) dans l'autre champ d'usinage (13a) en fonction de l'autre rayonnement laser (20a) détecté, ainsi que l'étalonnage de l'autre dispositif balayeur (11a) par correction d'une position de consigne (X_{Ta}, Y_{Ta}) prédéterminée de l'autre dispositif balayeur (11a) en fonction de la position réelle (X_{Pa}, Y_{Pa}) de l'autre faisceau laser (6a) dans l'autre champ d'usinage (13a).

9. Procédé selon la revendication 8, dans lequel la détermination de la position réelle (X_{P}, Y_{P}) du faisceau laser (6) et la détermination de la position réelle (X_{Pa}, Y_{Pa}) de l'autre faisceau laser (6a) peuvent être effectuées en même temps.

10. Machine d'usinage (1) permettant de fabriquer des pièces (2) tridimensionnelles par exposition des couches de poudre (3) à un rayonnement, comprenant :
un dispositif d'exposition à un rayonnement (4) comportant un dispositif balayeur (11) permettant de positionner un faisceau laser (6) dans un champ d'usinage (13),
une chambre d'usinage (15) dans laquelle est formé le champ d'usinage (13) et laquelle comporte un support (14) permettant d'appliquer les couches de poudre (3),
au moins un rétroréflecteur (19, 19a-f), qui est disposé dans le champ d'usinage (13) du dispositif balayeur (11),
un détecteur (22) permettant de détecter un rayonnement laser (20), qui, lors du passage du rétroréflecteur (19, 19a-f) avec le faisceau laser (6), est rétroréfléchi depuis le rétroréflecteur (19, 19a-f) vers le dispositif balayeur (11),
un dispositif d'évaluation (24) permettant de déterminer une position réelle (X_{P}, Y_{P}) du faisceau laser (6) dans le champ d'usinage (13) en fonction du rayonnement laser (20) détecté,
un dispositif de commande (23) permettant de prédéterminer une position de consigne (X_{T}, Y_{T}) du faisceau laser (6) dans le champ d'usinage (13), le dispositif de commande (23) étant conçu pour corriger la position de consigne (X_{T}, Y_{T}) prédéterminée en fonction de la position réelle (X_{P}, Y_{P}) déterminée, ainsi que
un dispositif de déplacement (17) permettant de déplacer l'au moins un rétroréflecteur (19, 19a-f) dans le champ d'usinage (13) du dispositif balayeur (11).

11. Machine d'usinage selon la revendication 10, dans laquelle le dispositif de déplacement, permettant de déplacer l'au moins un rétroréflecteur (19, 19a-f) dans le champ d'usinage (13) du dispositif balayeur (11), est conçu sous la forme d'un dispositif (17) permettant d'appliquer des couches de poudre (3).

12. Machine d'usinage selon la revendication 10 ou 11, dans laquelle le rétroréflecteur est conçu sous la forme d'un objet tridimensionnel ou sous la forme d'une zone de surface rétroréfléchissante (19a-f).

13. Machine d'usinage selon l'une quelconque des revendications 10 à 12, dans laquelle le détecteur est conçu sous la forme d'une diode (22).

14. Machine d'usinage selon l'une quelconque des revendications 10 à 13, comprenant en outre :
un autre dispositif balayeur (11a) permettant de positionner un autre faisceau laser (6a) dans un autre champ d'usinage (13a),
un autre détecteur (22a) permettant de détecter un autre rayonnement laser (22a), qui, lors du passage du rétroréflecteur (19, 19a-f) avec l'autre faisceau laser (6a), est rétroréfléchi depuis le rétroréflecteur (19, 19a-f) vers l'autre dispositif balayeur (11a),
un autre dispositif d'évaluation (24a) permettant de déterminer une position réelle (X_{Pa}, Y_{Pa}) de l'autre faisceau laser (6a) dans l'autre champ d'usinage (13a) en fonction de l'autre rayonnement laser (20a) détecté, ainsi que
un autre dispositif de commande (23a) permettant de prédéterminer une position de consigne (X_{Ta}, Y_{Ta}) de l'autre faisceau laser (6a) dans l'autre champ d'usinage (13a), l'autre dispositif de commande (23a) étant conçu pour corriger la position de consigne (X_{Ta}, Y_{Ta}) prédéterminée en fonction de la position réelle (X_{Pa}, Y_{Pa}) déterminée.
